# EUROPÄISCHE PATENTSCHRIFT

(11) **EP 2 781 402 B1**
(45) Veröffentlichungstag und Bekanntmachung des Hinweises auf die Patenterteilung: **19.04.2017**
(21) Anmeldenummer: 13191711.4
(22) Anmeldetag: 06.11.2013
(51) Int. Cl.: B60N 3/06, B60N 3/04

(54) **Fußablage für einen Fahrzeuginsassen**
Foot rest for a vehicle occupant
Repose-pieds pour le passager d'un véhicule

(30) Priorität: 22.03.2013 DE 102013005071
(43) Veröffentlichungstag der Anmeldung: 24.09.2014
(73) Patentinhaber: Volkswagen Aktiengesellschaft, 38440 Wolfsburg (DE)
(72) Erfinder: Wienert, Norbert, 38518 Gifhorn (DE); Mack, Christoph, 38124 Braunschweig (DE); Schröter, Oliver, 38518 Gifhorn (DE); Ghozzi, Yassine, 38448 Wolfsburg (DE)

(56) Entgegenhaltungen:
- DE-A1-102009 039 470
- FR-A1- 2 689 081
- JP-A- H09 263 168
- JP-A- 2006 273 053
- US-A- 5 836 637

## Beschreibung

Die Erfindung betrifft eine Fußablage für einen in einer Fahrgastzelle eines Fahrzeugs, insbesondere eines Kraftfahrzeugs, sitzenden Fahrzeuginsassen nach dem Oberbegriff des Patentanspruchs 1 der Erfindung.

Für die Zwecke der vorliegenden Beschreibung soll die übliche Fahrtrichtung eines Kraftfahrzeugs mit "-x" ("minus x"), die Richtung entgegen seiner üblichen Fahrtrichtung mit "+x" ("plus x"), ausgehend von der üblichen Fahrtrichtung (-x) die Richtung in der Horizontalen quer zur x-Richtung nach rechts gesehen mit "+y", ausgehend von der üblichen Fahrtrichtung (-x) die Richtung in der Horizontalen quer zur x-Richtung nach links gesehen mit "-y", die Richtung in der Vertikalen quer zur x-Richtung nach oben gesehen mit "+z", und die Richtung in der Vertikalen quer zur x-Richtung nach unten gesehen mit "-z" bezeichnet werden. Diese Bezeichnungsweise der Raumrichtungen in kartesischen Koordinaten entspricht dem in der Kraftfahrzeugindustrie allgemein verwendeten Koordinatensystem. Überdies werden Begriffe wie "vorne", "hinten", "oben" "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicherweise gebraucht werden.

Aus der DE 10 2004 021 362 A1 ist eine im Bereich zwischen den Vordersitzen und der Rückbank eines Fahrzeugs, insbesondere Kraftfahrzeugs, angeordnete Fußstütze bekannt, welche eine schwenkbar in einer wannenartigen Vertiefung im Fahrzeugboden angeordnete und angelenkte Trittplatte aufweist. Die Trittplatte ist in einer waagerechten oder im Wesentlichen waagerechten Ruhestellung durch eine entriegelbare Verriegelung gehalten und gleichzeitig durch vorgespannte Federmittel in Richtung Gebrauchsstellung kraftbeaufschlagt. Aus der US 2005/0000024 A1 ist ein manuell mittels des Mundes oder einer Handpumpe aufblasbares Luftkissen als Fußstütze bekannt, dessen Höhe und Stützwinkel mittels Klettverschlussbändern einstellbar ist. Aus der DE 2006 006 362 A1 ist darüber hinaus eine sogenannte pneumatische Beinauflage in einem Kraftfahrzeug bekannt, mit einem modularen Aufbau und mit einem in eine Gebrauchsstellung mittels einer Pumpe aufblasbaren Kissen, wobei das Kissen an einer im Fußraum des Kraftfahrzeugs befestigbaren Grundplatte angeordnet und mit dieser fest verbunden ist. Das aufblasbare Kissen ist innerhalb einer Aussparung einer Fußmatte der Grundplatte angeordnet und weist selbst eine der Aussparung der Grundplatte entsprechende Abdeckmatte auf. Die Abdeckmatte kann mit einer Kante an der Fußmatte angenäht sein, wodurch sich automatisch die Oberseite des Kissens relativ zur Abdeckmatte verschiebt, wenn das Kissen aufgeblasen wird. Die DE 10 2009 039 470 A1 beschreibt des Weiteren eine Fußstütze für einen Insassen eines Kraftfahrzeugs, welche eine einem Fahrzeugboden zugeordnete Trittplatte umfasst, die mittels einer Verstelleinrichtung in ihrer Höhenlage relativ zum Fahrzeugboden verstellbar ist. Die Verstelleinrichtung umfasst beispielsweise einen Luftbalg, der mittels einer Pumpe aufblasbar ist. Zur Realisierung eines Einklemmschutzes ist an der Trittplatte umfangsseitig eine in sich flexible Schürze oder ein Faltenbalg oder dergleichen angeordnet, wobei die Schürze oder der Faltenbalg an dem Fahrzeugboden festgelegt sind. Aus der US 4 955 658 A ist eine verstellbare Fußstütze für einen Insassen eines Kraftfahrzeugs bekannt, welche eine Fußauflage und einen aufblasbaren Luftsack umfasst. Die Fußauflage samt Luftsack ist in einem Teppichausschnitt angeordnet. In entleerter Position des Luftsacks ist die Fußauflage im Wesentlichen bündig mit der Teppichoberfläche angeordnet. Der Luftsack weist dabei eine Vielzahl flexibler Kammern auf. Die JP 2006 273053 A beschreibt eine mittels eines Hebemechanismus höhenverstellbare Fußablage, welche zweigliedrig durch eine vordere und eine hintere Platte gebildet ist, die einenends untereinander gelenkig verbunden und jeweils anderenends gelenkig abgestützt sind. Als Hebemechanismus ist ein Hebelsystem vorgesehen, welches mit einem Sitzschiebemechanismus wirkverbunden ist. Die FR 2 689 081 A1 beschreibt einen in Schienen geführten Bodenabschnitt, der mit einem verschiebbaren Fahrzeugsitz wirkverbunden ist und infolge Verschieben des Fahrzeugsitzes auf einer Rampe ab- oder aufgleitet und so eine Höhenverstellung erfährt. Die US 5 836 637 A beschreibt einen Fahrzeugboden mit einer Senke, welche im Randbereich stufenförmig ausgebildet ist. Auf der Stufe ist eine plattenförmige Fußablage mit einer Oberseite und einer Unterseite abgelegt. Die Fußablage kann derart umgelegt werden, dass die Unterseite nach oben und die Oberseite nach unten weist. Oberseite und Unterseite sind in ihrer Oberflächenstruktur derart unterschiedlich ausgebildet, dass in Abhängigkeit davon, welche Seite nach oben weist, eine unterschiedliche Ablage der Füße in der Höhe und/oder Richtung ermöglich ist. Schließlich ist aus der JP H09 263168 A eine plattenförmige Fußablage bekannt, welche Fußablage an einem Randbereich schwenkbar gelagert und in ihrer Schwenkstellung fixierbar ist. Die übrigen Randbereiche der Fußablage weisen eine Schürze nach Art eines Faltenbalgs auf, der beidenends festgelegt ist.

Aufgabe der Erfindung ist es, eine im Hinblick auf den Stand der Technik alternative höhenverstellbare Fußablage für einen in einer Fahrgastzelle eines Fahrzeugs sitzenden Fahrzeuginsassen zu schaffen, welche mittels einfacher und kostengünstiger Maßnahmen in jedwedem Betriebszustand der Fußablage eine nahezu geschlossene Ansicht der Oberfläche des Fahrgastzellenbodens gewährleistet.

Ausgehend von einer Fußablage für einen in einer Fahrgastzelle eines Fahrzeugs, insbesondere eines Kraftfahrzeugs, sitzenden Fahrzeuginsassen, wobei die Fußablage plattenförmig sowie formstabil ausgebildet und mittels zumindest eines sich unmittelbar oder mittelbar auf einem einen Bodenbelag aufweisenden Boden der Fahrgastzelle abstützenden sowie aufblasbaren Luftsackes in der Höhe verstellbar ist, wird die gestellte Aufgabe dadurch gelöst, dass die plattenförmige Fußablage von einer biegsamen Fußmatte abgedeckt ist, die derart größer als die Fußablage ausgebildet ist, dass in Gebrauchsstellung der Fußablage, d.h. auch bei maximalem Hub derselben, über die Fußablage überstehende Randabschnitte der Fußmatte auf dem Bodenbelag der Fahrgastzelle aufliegen, wobei die Fußmatte biegsam aber relativ steif ausgebildet ist, so dass über die Fußablage überstehende Randabschnitte der Fußmatte sich auf dem Bodenbelag verschieben, wenn die Fußablage von ihrer Nichtgebrauchsstellung in eine Gebrauchsstellung überführt wird.

Dies hat den Vorteil, dass zum einen in jedwedem Betriebszustand der Fußablage eine nahezu geschlossene Ansicht der Oberfläche des Fahrgastzellenbodens gewährleistet und zum anderen eine einfache Reinigung desselben ermöglicht sowie der zumindest eine Luftsack weitestgehend vor Verschmutzung geschützt ist.

Die Unteransprüche beschreiben bevorzugte Weiterbildungen oder Ausgestaltungen der Erfindung.

Danach ist die Fußmatte mit der Fußablage fest verbunden. Dies hat den Vorteil, dass immer eine definierte Lage der Fußmatte zur Fußablage gewährleistet ist. Ein Verrutschen der Fußmatte relativ zur Fußablage ist vermieden. Die Fußmatte kann beispielsweise mit der Fußablage verklebt oder mittels Klettverschluss mit der Fußablage lösbar verbunden sein. Wie die Erfindung weiter vorsieht, ist die Fußablage mittels des zumindest einen Luftsackes bevorzugt durch Höhenverstellung um eine in Fahrzeugquerrichtung (y-Richtung) weisende und in eine fahrzeugheckseitige Kante der Fußablage oder fahrzeugheckseitig hinter der besagten Kante gelegte Schwenkachse nach oben schwenkbar. Hierdurch ist eine ergonomisch günstige Einstellung der Fußablage ermöglicht. Wie die Erfindung noch vorsieht, liegt die Fußmatte mit einem fahrzeugheckseitigen Randabschnitt auf dem Bodenbelag ortsfest auf, wogegen die übrigen Randabschnitte relativ zum Bodenbelag verschiebbar sind. Wird die Fußablage von ihrer Nichtgebrauchsstellung in eine Gebrauchsstellung überführt, d.h. vom Fahrzeugboden ausgehend mittels des zumindest einen Luftsacks pneumatisch verschwenkt, verschieben sich vorteilhaft die besagten übrigen Randbereiche auf dem Bodenbelag zur Fußablage hin, ohne sich vom Bodenbelag wesentlich zu lösen. Da die Fußmatte herkömmlich relativ steif, jedoch biegsam ausgebildet ist, werden bei Rückführung der Fußablage die besagten Randbereiche auf dem Bodenbelag in ihre Ausgangsstellung zurückgeschoben. Der fahrzeugheckseitige Randbereich der Fußmatte behält dabei seine ortsfeste Lage durch die mittels des zumindest einen sich auf dem Boden der Fahrgastzelle abstützenden Luftsacks bewirkte Neigungsbewegung der Fußablage um besagte Schwenkachse bei.

In weiterer Ausgestaltung der Erfindung ist des Weiteren vorgesehen, dass die Fußablage gemäß einer ersten Ausgestaltungsvariante der Erfindung lose auf dem zumindest einen Luftsack angeordnet ist. Durch diese Maßnahme sind Relativbewegungen zwischen dem sich bevorzugt unmittelbar auf dem Boden der Fahrgastzelle abstützenden Luftsack und der Fußablage ermöglicht. Gemäß einer zweiten Ausgestaltungsvariante der Erfindung ist die Fußablage mit dem zumindest einen Luftsack lösbar verbunden, beispielsweise mittels Klettverschluss, um eine definierte Führung der Fußablage zu gewährleisten.

Um eine einfache und kostengünstige Montage des zumindest einen Luftsackes im Fahrzeug zu ermöglichen, ist der zumindest eine Luftsack in vorteilhafter Weiterbildung der Erfindung von einer Trägerplatte getragen, die am Boden der Fahrgastzelle und/oder am Bodenbelag befestigt oder befestigbar ist. Bevorzugt bilden dabei wenigstens die Trägerplatte und der zumindest eine Luftsack ein Anbaumodul aus. Ferner ist vorgesehen, dass der zumindest eine Luftsack samt Fußablage und gegebenenfalls Trägerplatte in der Nichtgebrauchsstellung, in welcher der zumindest eine Luftsack leer ist, nahezu waagerecht in einer nach Fahrzeug-unten gerichteten wannenartigen Verprägung oder Ausnehmung des Bodens der Fahrgastzelle angeordnet ist. Durch diese vorteilhafte Maßnahme ist trotz zusätzlicher Einbauten eine Minderung des freien Innenraums der Fahrgastzelle verhindert oder zumindest verringert. Dabei ist die Fußablage bevorzugt derart dimensioniert und derart in besagter Nichtgebrauchsstellung in der Verprägung oder Ausnehmung des Fahrgastzellenbodens vertikal abgestützt, dass ihre Oberkante plan in die seitlich benachbarte Oberkante des auf dem Boden aufgebrachten Bodenbelages übergeht. Dies hat den Vorteil, dass die höhenverstellbare Fußablage in ihrer Nichtgebrauchsstellung sozusagen kaschiert, d.h. nicht auffällig ist. Überdies ist es bei Bedarf ohne große Umbauten möglich, die höhenverstellbare Fußablage mit einer nicht höhenverstellbaren Fußablage auszutauschen. So kann beispielsweise ein Fahrzeugmodell durchgängig mit der besagten Verprägung oder Ausnehmung ausgebildet werden und je nach Kundenwunsch in derselben eine höhen- oder nicht höhenverstellbare Fußablage verbaut werden. Schließlich ist vorgesehen, dass der Boden der Fahrgastzelle durch zumindest ein auf den Karosserie-Rohbau des Fahrzeugs aufgebrachtes und akustisch wirksames Dämpfungsteil gebildet ist.

Nachstehend wird die Erfindung anhand eines in den Zeichnungen schematisch dargestellten Ausführungsbeispiels näher erläutert. Sie ist jedoch nicht auf dieses beschränkt, sondern erfasst alle durch die Patentansprüche definierten Ausgestaltungen. Es zeigen:
- Fig. 1: ein mit einer erfindungsgemäßen Fußablage ausgestattetes Fahrzeug in einer Seitenansicht,
- Fig. 2: den Boden der Fahrgastzelle zwischen dem vorderen rechten Fahrzeugsitz und der Rücksitzbank des Fahrzeugs nach Fig. 1 mit einer Fußmatte und einer von derselben abgedeckten plattenförmigen sowie höhenverstellbaren Fußablage,
- Fig. 3: den Fahrgastzellenboden nach Fig. 2 ohne Fußmatte, mit einem auf dem Boden abgestützten bzw. befestigten Luftsack zur Höhenverstellung der Fußablage,
- Fig. 4: den Schnitt "I-I" nach Fig. 2, mit der höhenverstellbaren Fußablage in einer Nichtgebrauchsstellung,
- Fig. 5: den Schnitt "I'-I'" nach Fig. 2, mit der höhenverstellbaren Fußablage in einer Gebrauchsstellung, und
- Fig. 6: die Einzelheit "Z" nach Fig. 4.

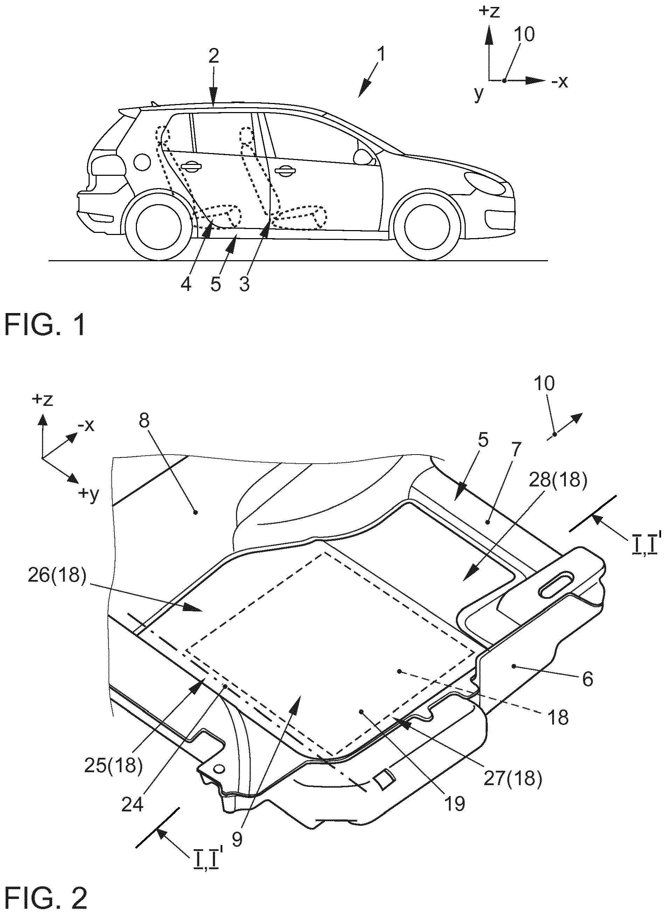

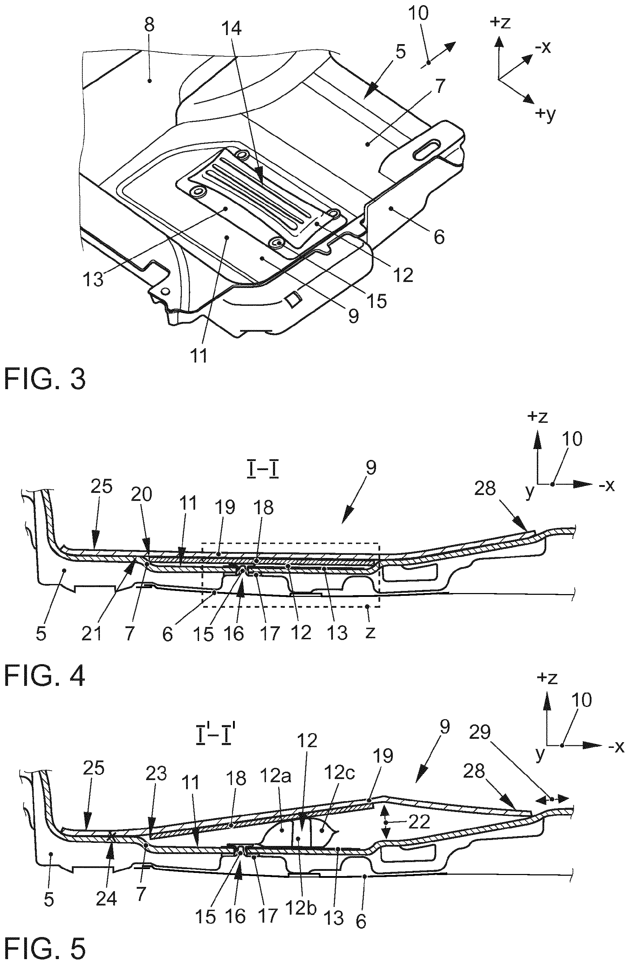

Die Fig. 1 zeigt zunächst ein Fahrzeug 1, vorliegend ein Kraftfahrzeug in Form eines Personenkraftwagens, mit einer Fahrgastzelle 2, in welcher zwei Vordersitze 3 und eine Rücksitzbank 4 angeordnet sind. Der Boden 5 der Fahrgastzelle 2 ist durch zumindest ein auf den Karosserie-Rohbau 6 bzw. dessen Metallblech aufgebrachtes akustisches Dämpfungsteil aus einem Kunststoffschaum, bevorzugt aus einem Polyurethan-Schaum (PU bzw. PUR), gebildet und weist einen Bodenbelag 7 in Form eines Teppichbodens aus insbesondere Velours auf (vgl. insbes. Fig. 3 bis 6). Unter Velours wird dabei ein Gewebe mit aufgeschnittenen Schlingen verstanden.

Im Fondbereich der Fahrgastzelle 2, d. h. zwischen den Vordersitzen 3 und der Rücksitzbank 4 sind in Fahrzeugquerrichtung (y-Richtung) gesehen zwei mittels eines Mitteltunnels 8 voneinander separierte hintere Fußablageflächen 9 angeordnet, die bezeichnenderweise der Ablage der Füße von auf der Rücksitzbank 4 sitzenden Fahrzeuginsassen dienen und sich in Fahrtrichtung 10 des Fahrzeugs 1 gesehen von der Rücksitzbank 4 ausgehend bis unter den jeweiligen Vordersitz 3 erstrecken. Vorliegend ist lediglich beispielgebend die rechte hintere Fußablagefläche 9 gezeigt. Sowohl der besagte Boden 5 als auch der Bodenbelag 7 bilden im Bereich der besagten Fußablageflächen 9 eine wannenartige Verprägung 11 oder Ausnehmung aus (vgl. insbes. Fig. 3 bis 6).

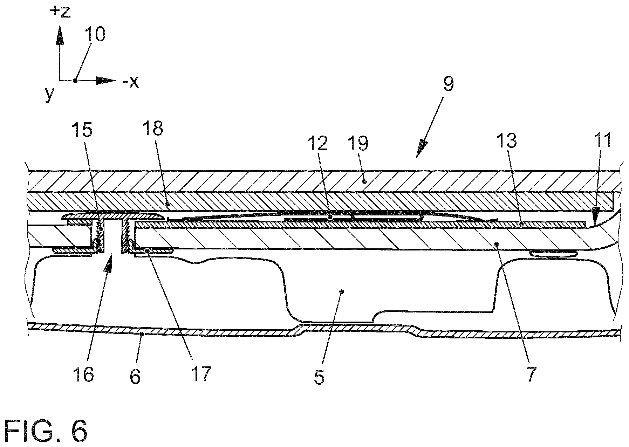

Innerhalb besagter Verprägung 11 ist ein mittels einer nicht zeichnerisch dargestellten und vom Fahrzeuginsassen über beispielsweise einen Touchscreen oder ein sonstiges bekanntes Bedienelement bedienbaren Pneumatik des Fahrzeugs 1 aufblasbarer Luftsack 12 angeordnet. Dieser ist von einer Trägerplatte 13 getragen und bildet mit derselben ein Anbaumodul 14 aus. Das besagte Anbaumodul 14 ist gemäß den Fig. 3 bis 6 über die Trägerplatte 13 mittels mechanischer Befestigungselemente, vorliegend mittels Rastknöpfen 15 am Boden 5 befestigt bzw. befestigbar. Dabei durchsetzen besagte Rastköpfe 15 Bohrungen 16 im Bodenbelag 7 und im Boden 5 und verrasten mit einer korrespondierenden Rastaufnahme 17, die ihrerseits am Boden 5 festgelegt ist (Fig. 6).

Gemäß den Fig. 2, 4 bis 6 ist des Weiteren eine plattenförmige sowie formstabile Fußablage 18 aus beispielsweise Kunststoff oder Leichtmetall vorgesehen, die ihrerseits oberhalb des Luftsackes 12 angeordnet und mittels desselben von einer Nichtgebrauchsstellung (Fig. 4) in eine Gebrauchsstellung (Fig. 5) und zurück höhenverstellbar ist, wenn der Luftsack 12 aufgeblasen wird. Wie den Zeichnungsfiguren weiter zu entnehmen ist, ist die plattenförmige Fußablage 18 von einer biegsamen Fußmatte 19 abgedeckt, die sich gemäß Fig. 2 über die gesamte Fußablagefläche 9 erstreckt und die plattenförmige Fußablage 18 randseitig, vorzugsweise umlaufend randseitig, überragt. Die Fußmatte 19 ist im Allgemeinen relativ steif, jedoch biegsam ausgebildet und besteht beispielsweise aus einem Elastomer, einem Gewebe oder einer Kombination daraus. Die Fußmatte 19 ist mit der Fußablage 18 fest verbunden oder verbindbar, woraus eine definierte Lage der Fußmatte 19 zur Fußablage 18 resultiert. Ein Verrutschen der Fußmatte 19 relativ zur Fußablage 18 ist vermieden. Die Fußmatte 19 kann beispielsweise mit der Fußablage 18 verklebt oder mittels Klettverschluss oder Druckknöpfen mit der Fußablage 18 lösbar verbunden sein.

Wie insbesondere der Fig. 4 zu entnehmen ist, ist die Fußablage 18 derart in besagter Nichtgebrauchsstellung nahezu waagerecht in der Verprägung 11 angeordnet und vertikal abgestützt, dass ihre Oberkante 20 plan in die seitlich zu derselben angeordnete bzw. benachbarte Oberkante 21 des auf dem Boden 5 aufgebrachten Bodenbelages 7 übergeht. In diesem Betriebszustand der Fußablage 18 ist eine ebene Fußablagefläche 9 gewährleistet.

Gemäß Fig. 5 ist die Fußablage 18 ausgehend von ihrer Nichtgebrauchsstellung (Fig. 4) innerhalb der Verprägung 11 mittels des zumindest einen Luftsackes 12 durch Höhenverstellung (Richtungspfeil 22) um eine in Fahrzeugquerrichtung (y-Richtung) weisende und in eine fahrzeugheckseitige Kante 23 der Fußablage 18 oder fahrzeugheckseitig hinter der besagten Kante 23 gelegte imaginäre Schwenkachse 24 (Fig. 2 und 5) nach oben in eine Gebrauchsstellung schwenkbar. Hierdurch ist eine ergonomisch günstige Einstellung der Fußablage 18 ermöglicht.

Dabei greift vorliegend der Luftsack 12 in einem vorderen Bereich der Fußablage 18 an, wodurch besagte Schwenkbewegung bewirkt wird und im Ergebnis die Fußmatte 19 mit einem fahrzeugheckseitigen bzw. hinteren Randabschnitt 25 auf dem Bodenbelag 7 ortsfest liegen bleibt, wogegen die übrigen, vorliegenden seitlichen und vorderen Randabschnitte 26, 27, 28 relativ zum Bodenbelag 7 verschoben werden (Richtungspfeil 29). Um die ortsfeste Lage des fahrzeugheckseitigen bzw. hinteren Randabschnitts 23 besonders zu gewährleisten, kann dieser auch mit dem Bodenbelag 7 fest verbunden, vorzugsweise lösbar verbunden sein, wozu sich Klettverschlüsse oder Druckknöpfe besonders anbieten (nicht zeichnerisch dargestellt). Bevorzugt verschieben sich beim Hochschwenken der Fußablage 18 die Randabschnitte 26, 27, 28 auf dem Bodenbelag 7 zur Fußablage 18 hin, ohne sich vom Bodenbelag 7 wesentlich zu lösen. Da die Fußmatte 19 herkömmlich relativ steif, jedoch biegsam ausgebildet ist, werden bei Rückführung der Fußablage 18 in ihre Nichtgebrauchsstellung die besagten Randabschnitte 26, 27, 28 auf dem Bodenbelag 7 wieder in ihre Ausgangsstellung zurückgeschoben.

Gemäß der vorstehend beschriebenen Ausgestaltungsvariante der Erfindung ist die Fußablage 18 lose auf dem zumindest einen Luftsack 12 angeordnet. Hierdurch sind Relativbewegungen zwischen dem Luftsack 12 und der Fußablage 18 ermöglicht. Demgegenüber kann die Fußablage 18 auch mit dem zumindest einen Luftsack 12 lösbar verbunden, beispielsweise mittels Klettverschluss verbunden sein, um eine definierte Führung der Fußablage 18 während der Höhenverstellung mittels des Luftsackes 12 zu gewährleisten. Dieses wird insbesondere dann als zweckmäßig angesehen, wenn das Verschwenken mittels eines besonders ausgebildeten Luftsackes 12 bewirkt wird, der seinerseits in Fahrzeuglängsrichtung (x-Richtung) gesehen unterschiedlichen Hub, insbesondere nach Fahrzeug-vorn einen höheren Hub als nach Fahrzeug-hinten ausbildet. Ein derartiger Luftsack 12 kann beispielsweise wie in Fig. 5 schematisch angedeutet durch mehrere Luftkammern 12a, b, c gebildet sein, die in diesem Sinne unterschiedlichen Hub bewirken.

Das vorstehend beschriebene Ausführungsbeispiel stellt im Wesentlichen auf eine höhenverstellbare Fußablage 18 im Fondbereich der Fahrgastzelle 2 ab. Die Erfindung beschränkt sich jedoch nicht auf dieses Ausführungsbeispiel, sondern erfasst selbstverständlich auch eine auf den Vordersitzen 3 sitzenden Fahrzeuginsassen zugeordnete Fußablage 18 der erfindungsgemäßen Art.

### Bezugszeichenliste

- 1: Fahrzeug
- 2: Fahrgastzelle
- 3: Vordersitz
- 4: Rücksitzbank
- 5: Boden
- 6: Karosserie-Rohbau
- 7: Bodenbelag
- 8: Mitteltunnel
- 9: Fußablagefläche
- 10: Fahrtrichtung
- 11: Verprägung
- 12: Luftsack
- 12a-c: Luftkammern
- 13: Trägerplatte
- 14: Anbaumodul
- 15: Rastknopf
- 16: Bohrung
- 17: Rastaufnahme
- 18: Fußablage
- 19: Fußmatte
- 20: Oberkante (Fußablage 18)
- 21: Oberkante (Bodenbelag 7)
- 22: Richtungspfeil
- 23: fahrzeugheckseitige Kante (Fußablage 18)
- 24: Schwenkachse
- 25: fahrzeugheckseitiger / hinterer Randabschnitt (Fußmatte 19)
- 26: seitlicher Randabschnitt (Fußmatte 19)
- 27: seitlicher Randabschnitt (Fußmatte 19)
- 28: vorderer Randabschnitt (Fußmatte 19)
- 29: Richtungspfeil

## Patentansprüche

1. Fußablage (18) für einen in einer Fahrgastzelle (2) eines Fahrzeugs (1), insbesondere eines Kraftfahrzeugs, sitzenden Fahrzeuginsassen, wobei die Fußablage (18) plattenförmig sowie formstabil ausgebildet und mittels zumindest eines sich auf einem einen Bodenbelag (7) aufweisenden Boden (5) der Fahrgastzelle (2) abstützenden sowie aufblasbaren Luftsackes (12) in der Höhe verstellbar ist, **dadurch gekennzeichnet, dass** die plattenförmige Fußablage (18) von einer biegsamen Fußmatte (19) abgedeckt ist, die derart größer als die Fußablage (18) ausgebildet ist, dass in Gebrauchsstellung der Fußablage (18), d.h. auch bei maximalem Hub derselben, über die Fußablage (18) überstehende Randabschnitte (25, 26, 27, 28) der Fußmatte (19) auf dem Bodenbelag (7) der Fahrgastzelle (2) aufliegen, wobei die Fußmatte (19) biegsam aber relativ steif ausgebildet ist, so dass über die Fußablage (18) überstehende Randabschnitte (26, 27, 28) der Fußmatte (19) sich auf dem Bodenbelag (7) verschieben, wenn die Fußablage (18) von ihrer Nichtgebrauchsstellung in eine Gebrauchsstellung überführt wird.

2. Fußablage (18) nach Anspruch 1, **dadurch gekennzeichnet, dass** die Fußmatte (19) mit der Fußablage (18) fest verbunden ist.

3. Fußablage (18) nach Anspruch 1 oder 2, **dadurch gekennzeichnet, dass** die Fußablage (18) mittels des zumindest einen Luftsackes (12) durch Höhenverstellung um eine in Fahrzeugquerrichtung (y-Richtung) weisende und in eine fahrzeugheckseitige Kante (23) der Fußablage (18) oder fahrzeugheckseitig hinter der besagten Kante (23) gelegte Schwenkachse (24) nach oben schwenkbar ist.

4. Fußablage (18) nach Anspruch 3, **dadurch gekennzeichnet, dass** die Fußmatte (19) mit einem fahrzeugheckseitigen Randabschnitt (25) auf dem Bodenbelag (7) ortsfest aufliegt, wogegen die übrigen Randabschnitte (26, 27, 28) relativ zum Bodenbelag (7) verschiebbar sind.

5. Fußablage (18) nach einem der Ansprüche 1 bis 4, **dadurch gekennzeichnet, dass** die Fußablage (18) lose auf dem zumindest einen Luftsack (12) angeordnet oder mit demselben lösbar verbunden ist.

6. Fußablage (18) nach einem der Ansprüche 1 bis 5, **dadurch gekennzeichnet, dass** der zumindest eine Luftsack (12) von einer Trägerplatte (13) getragen ist, die am Boden (5) der Fahrgastzelle (2) und/oder am Bodenbelag (7) befestigt oder befestigbar ist.

7. Fußablage (18) nach Anspruch 6, **dadurch gekennzeichnet, dass** wenigstens die Trägerplatte (13) und der zumindest eine Luftsack (12) ein Anbaumodul (14) ausbilden.

8. Fußablage (18) nach einem der Ansprüche 1 bis 7, **dadurch gekennzeichnet, dass** der zumindest eine Luftsack (12) samt Fußablage (18) und gegebenenfalls Trägerplatte (13) in der Nichtgebrauchsstellung, in welcher der zumindest eine Luftsack (12) leer ist, nahezu waagerecht in einer nach Fahrzeug-unten gerichteten wannenartigen Verprägung (11) oder Ausnehmung des Bodens (5) der Fahrgastzelle (2) angeordnet sind.

9. Fußablage (18) nach Anspruch 8, **dadurch gekennzeichnet, dass** die Fußablage (18) derart dimensioniert und derart in besagter Nichtgebrauchsstellung in der Verprägung (11) oder Ausnehmung vertikal abgestützt ist, dass ihre Oberkante (20) plan in die seitlich benachbarte Oberkante (21) des auf dem Boden (5) aufgebrachten Bodenbelages (7) übergeht.

10. Fußablage (18) nach einem der Ansprüche 1 bis 9, **dadurch gekennzeichnet, dass** der Boden (5) der Fahrgastzelle (2) durch zumindest ein auf den Karosserie-Rohbau (6) des Fahrzeugs (1) aufgebrachtes, akustisch wirksames Dämpfungsteil gebildet ist.

## Claims

1. Foot rest (18) for a vehicle occupant sitting in a passenger cell (2) of a vehicle (1), in particular of a motor vehicle, wherein the foot rest (18) is of plate-like and dimensionally stable design and is height-adjustable by means of at least one inflatable airbag (12) supported on a floor (5), which has a floor covering (7), of the passenger cell (2), **characterized in that** the plate-like foot rest (18) is covered by a flexible foot mat (19) which is designed to be larger than the foot rest (18) such that edge portions (25, 26, 27, 28) of the foot mat (19) that protrude over the foot rest (18) in the use position of the foot rest (18), i.e. even at maximum lift of same, rest on the floor covering (7) of the passenger cell (2), wherein the foot mat (19) is of flexible but relatively stiff design, and therefore edge portions (26, 27, 28) of the foot mat (19) that protrude over the foot rest (18) are displaced on the floor covering (7) when the foot rest (18) is transferred from its non-use position into a use position.

2. Foot rest (18) according to Claim 1, **characterized in that** the foot mat (19) is fixedly connected to the foot rest (18).

3. Foot rest (18) according to Claim 1 or 2, **characterized in that** the foot rest (18) is pivotable upwards by means of the at least one airbag (12) by height adjustment about a pivot axis (24) pointing in the transverse direction of the vehicle (y direction) and placed into an edge (23) of the foot rest (18) at the vehicle rear or behind said edge (23) at the vehicle rear.

4. Foot rest (18) according to Claim 3, **characterized in that** the foot mat (19) rests in a positionally fixed manner on the floor covering (7) by an edge portion (25) at the vehicle rear, whereas the remaining edge portions (26, 27, 28) are displaceable relative to the floor covering (7).

5. Foot rest (18) according to one of Claims 1 to 4, **characterized in that** the foot rest (18) is arranged loosely on the at least one airbag (12) or is connected releasably thereto.

6. Foot rest (18) according to one of Claims 1 to 5, **characterized in that** the at least one airbag (12) is supported by a carrier plate (13) which is fastened or is fastenable to the floor (5) of the passenger cell (2) and/or to the floor covering (7).

7. Foot rest (18) according to Claim 6, **characterized in that** at least the carrier plate (13) and the at least one airbag (12) form an add-on module (14).

8. Foot rest (18) according to one of Claims 1 to 7, **characterized in that** the at least one airbag (12) together with the foot rest (19) and optionally the carrier plate (13) in the non-use position in which the at least one airbag (12) is empty are arranged virtually horizontally in a vehicle-downwardly directed, trough-like impression (11) or recess in the floor (5) of the passenger cell (2).

9. Foot rest (18) according to Claim 8, **characterized in that** the foot rest (18) is dimensioned in such a manner and is vertically supported in the impression (11) or recess in said non-use position in such a manner that its upper edge (20) merges in a planar manner into the laterally adjacent upper edge (21) of the floor covering (7) provided on the floor (5).

10. Foot rest (18) according to one of Claims 1 to 9, **characterized in that** the floor (5) of the passenger cell (2) is formed by at least one acoustically effective damping part provided on the body shell (6) of the vehicle (1).

## Revendications

1. Repose-pieds (18) pour un passager de véhicule assis dans un habitacle (2) d'un véhicule (1), notamment d'un véhicule automobile, le repose-pieds (18) étant réalisé en forme de plaque ainsi que de forme de stable et étant réglé en hauteur à l'aide d'au moins une poche d'air (12) pouvant être gonflée et s'appuyant sur un plancher (5) de l'habitacle (2) comportant une garniture de plancher (7), **caractérisé en ce que** le repose-pieds (18) en forme de plaque est recouvert par un tapis de pieds (19) souple réalisé de façon à être plus grand que le repose-pieds (18), que dans la position d'utilisation du repose-pieds (18), c'est-à-dire également lorsque celui-ci est relevé au maximum, des sections de bordure (25, 26, 27, 28), saillant au-delà du repose-pieds (18), du tapis de pieds (19) reposent sur la garniture de plancher (7) de l'habitacle (2), le tapis de pieds (19) est réalisé de façon souple mais relativement rigide, de sorte que les sections de bordure (26, 27, 28), saillant au-delà du repose-pieds (18), du tapis de pieds (19) se déplacent sur la garniture de plancher (7) lorsque le repose-pieds (18) est transféré de sa position de non-utilisation dans une position d'utilisation.

2. Repose-pieds (18) selon la revendication 1, **caractérisé en ce que** le tapis de pieds (19) est relié fixement au repose-pieds (18).

3. Repose-pieds (18) selon la revendication 1 ou 2, **caractérisé en ce que** le repose-pieds (18) peut pivoter vers le haut à l'aide de l'au moins une poche d'air (12) par réglage en hauteur d'un axe de pivotement (24) orienté dans la direction transversale de véhicule (direction y) et placé dans une arête (23) du côté haillon de véhicule du repose-pieds (18) ou du côté haillon de véhicule derrière ladite arête (23).

4. Repose-pieds (18) selon la revendication 3, **caractérisé en ce que** le tapis de pieds (19) repose fixement sur place avec une section de bordure (25) située du côté haillon de véhicule sur la garniture de plancher (7), tandis que les sections de bordure (26, 27, 28) restantes peuvent être déplacées par rapport à la garniture de plancher (7).

5. Repose-pieds (18) selon l'une quelconque des revendications 1 à 4, **caractérisé en ce que** le repose-pieds (18) est disposé de façon lâche sur l'au moins une poche d'air (12) ou est relié de façon amovible à elle.

6. Repose-pieds (18) selon l'une quelconque des revendications 1 à 5, **caractérisé en ce que** l'au moins une poche d'air (12) est supportée par une plaque de support (13) fixée ou pouvant être fixée au plancher (5) de l'habitacle (2) et/ou à la garniture de plancher (7).

7. Repose-pieds (18) selon la revendication 6, **caractérisé en ce qu'**au moins la plaque de support (13) et l'au moins une poche d'air (12) forment un module de montage (14).

8. Repose-pieds (18) selon l'une quelconque des revendications 1 à 7, **caractérisé en ce que** l'au moins une poche d'air (12) est disposée, conjointement avec le repose-pieds (18) et le cas échéant la plaque de support (13), dans la position de non-utilisation dans laquelle l'au moins une poche d'air (12) est vide, pratiquement horizontalement dans un estampage (11) de type bassine orienté vers le bas du véhicule ou un évidement du plancher (5) de l'habitacle (2).

9. Repose-pieds (18) selon la revendication 8, **caractérisé en ce que** le repose-pieds (18) est dimensionné de telle sorte et maintenu de telle sorte verticalement dans ladite position de non-utilisation dans l'estampage (11) ou l'évidement que son arête supérieure (20) se change de façon plane en une arête supérieure (21) connexe en côté de la garniture de plancher (7) appliquée sur le plancher (5).

10. Repose-pieds (18) selon l'une quelconque des revendications 1 à 9, **caractérisé en ce que** le plancher (5) de l'habitacle (2) est formé par au moins une partie d'amortissement ayant une action acoustique et appliquée sur la carcasse de carrosserie (6) du véhicule (1).
